# EUROPEAN PATENT APPLICATION

(11) **EP 1 746 506 A1**
(43) Date of publication of application: **24.01.2007**
(21) Application number: 05016001.9
(22) Date of filing: 22.07.2005
(51) Int. Cl.: G06F 11/14, G06F 13/00

(54) **Portable device and automatic backup method of computer data on the device**

(71) Applicant: Synology Inc., Taipei (TW)
(72) Inventor: Liao, Cheen, Taipei (TW); Chang, Chia-Hsu, Taipei (TW); Tu, Tun-Hung, Taipei (TW); Li, Jia-Shiun, Taipei (TW); Huang, Yi-Lin, Taipei (TW); Liao, Ting-Ming, Taipei (TW)
(74) Representative: Viering, Jentschura & Partner

(57) **Abstract**

A portable device (10) and its automatic backup method are provided to remove the problem that the data backup process of conventional external storage devices still needs to be performed manually. The portable device (10) of the present invention includes a control unit (11), a program storage unit (12) and a data storage unit (13). The program storage unit (12) has the necessary programs for installation of the portable device onto the computer (20) and backing up data. The data storage unit (13) is used for the computer (20) to store its data. The control unit (11) controls the communication between the data storage unit (13) and the computer (20) or between the program storage unit (12) and the computer (20). When the portable device (10) is connected to a computer (20), the computer (20) activates the auto-executive function to install the driver of the portable device (11) automatically. Then, the data is backed up automatically to store the computer's data onto the portable device.

## Description

### BACKGROUND OF THE INVENTION

### 1. Field of the Invention

The present invention is related to a portable device and its automatic backup method, and more particularly, to an external peripheral device having a storing capability and a method for automatically backing up data of a host computer.

### 2. Description of Related Art

When a new peripheral device is connected to a computer system the operating system (OS) needs to install a driver corresponding to the new device. The driver is used for the OS to drive the new connected device. If the OS can recognize the new connected device and provide the corresponding driver, the OS will install the driver itself. However, the OS cannot recognize every new connected device. In this situation, one needs to manually install the corresponding driver stored in optical disks or floppy disks provided together with the peripheral device.

Since computers are used extensively nowadays, digital storage technologies have replaced the conventional method that records messages on paper. Digital data has many convenient features. For example, they can be edited speedily, permanently preserved and stored on a large scale. Since portable devices, such as universal serial bus (USB) hard disks, have been introduced onto the market, users have been able to store and access mass data or programs regardless of where they are; users' information is no longer stuck on a hard drive. Rather it can be taken with the user and accessed using a computer at home, work or at any number of places. For driver installation of portable devices, if the drivers need to be installed via optical disks or floppy disks, one usually needs to carry the corresponding optical disks or floppy disks so that they can install the drivers onto other computers. However, this is inconvenient for the user.

Regarding the technologies for driver installation of portable devices, U.S. Patent No. 6,754,725 discloses an automatic mechanism for driver installation of a USB peripheral device. As disclosed in U.S. Patent No. 6,754,725, the corresponding driver is stored in the peripheral device. When the peripheral device is connected to a computer, it communicates with the computer via a USB protocol. Thereby, the computer can recognize the peripheral device as a mass storage device. The computer can access the corresponding driver from the peripheral device itself. After the installation of the corresponding driver, the computer can drive the peripheral device.

On the other hand, for backing up data, USB devices, such as USB hard disks, are a good choice because most present day computers have USB interfaces and USB devices are easily carried and can be used immediately after being plugged into a computer. However, one still needs to manually store the computer's data onto the USB hard disk for backup. The method provided in U.S. Patent No. 6,754,725 can only be used to install the corresponding drive automatically. It doesn't have the function of automatic data backup.

In addition, USB devices still have some drawbacks when in use. For example, USB hard disks have been introduced into the market for quite a few years, some people use them for backing up data. However, if a USB hard disk is lost, the data stored therein can be accessed easily by whoever finds it. It is obvious that data security for USB hard disks still needs to be improved upon.

Accordingly, as discussed above, the prior art still has some drawbacks that could be improved upon. The present invention aims to resolve these drawbacks.

### SUMMARY OF THE INVENTION

An objective of the present invention is to provide a portable device and its automatic backup method. When the portable device is connected to a computer, the driver of the portable device is automatically installed onto the computer and then the computer's data is automatically stored for backup.

For achieving the objective above, the present invention provides an automatic backup method of a portable device, used to store data of a computer onto the portable device for backup. The automatic backup method includes:
(a) providing a program storage unit and a data storage unit of the portable device, wherein the program storage unit has the necessary programs for installation of the portable device onto the computer and the data storage unit is used for the computer to store its data;
(b) receiving an inquiry signal sent from the computer when the portable device is connected to the computer;
(c) informing the computer that the portable device has the program storage unit and the data storage unit;
(d) executing an auto-executive program stored in the program storage unit if an auto-executive function of the computer is activated;
(e) installing a driver stored in the program storage unit onto the computer so that the computer can recognize the data storage unit via the driver;
(f) executing a backup program stored in the program storage unit, wherein locations of the data that need to be stored for backup are set in the backup program; and
(g) storing the data corresponding to the locations set in the backup program onto the data storage unit for backup.

For achieving the objectives above, the present invention provides a portable device, including an interface circuit used for connecting to a computer; a data storage unit; a program storage unit including an auto-executing program, a driver and a backup program, wherein the auto-executing program is capable of being executed in the computer automatically, the driver is used by the computer to recognize the portable device and the backup program is used to drive the computer to store data of the computer to the data storage unit for backup; and a control unit controlling communication between the data storage unit and the interface circuit, and between the program storage unit and the interface circuit. When the interface circuit is connected to the computer, the control unit receives an inquiry signal from the computer and then informs the computer that the portable device has the data storage unit and the program storage unit. Then, the computer executes the auto-executive program to install the driver onto the computer. After the installation of the driver, the backup program automatically drives the computer to store its data onto the data storage unit for backup.

Numerous additional features, benefits and details of the present invention are described in the detailed description, which follows.

### BRIEF DESCRIPTION OF THE DRAWINGS

The foregoing aspects and many of the attendant advantages of this invention will be more readily appreciated as the same becomes better understood by reference to the following detailed description, when taken in conjunction with the accompanying drawings, wherein:
Fig. 1 is a block diagram of a preferred embodiment in accordance with the present invention;
Fig. 2 is a schematic diagram of a program storage unit in accordance with the present invention;
Figs. 3A-B are operative flowcharts of the present invention;
Fig. 4 is a flowchart showing the operation of data protection in accordance with the present invention; and
Fig. 5 is a flowchart showing the operation of data backup in accordance with the present invention.

### DETAILED DESCRIPTION OF PREFERRED EMBODIMENTS

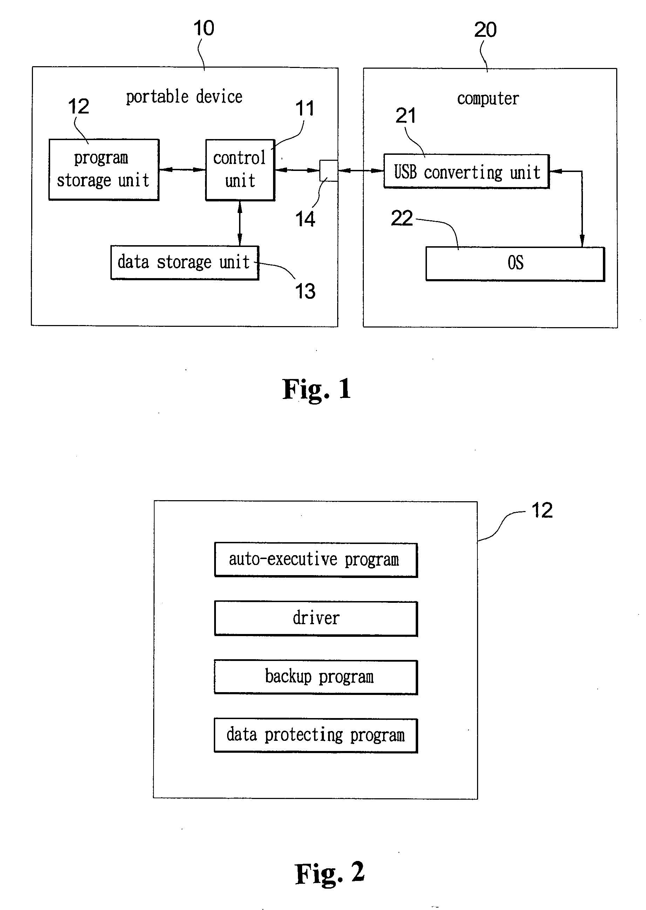

Reference is made to Fig. 1, which is a block diagram of a preferred embodiment in accordance with the present invention. The embodiment provides a portable device 10, which is a storage device and is capable of connecting to a computer 20. The portable device 10 has a program storage unit 12, which stores programs related to an execution process necessary for driver installation when the portable device 10 is connected to the computer 20. Reference is made to Fig. 2. The program storage unit 12 stores auto-executive programs, drivers, backup programs and data protecting programs. These programs consist of commands or codes. In this embodiment, the program storage unit 12 has a non-volatile storage device, such as a flash memory, an electrically erasable programmable read-only memory (EEPROM) or a hard disk, serving as a storage intermedium for the computer 20 to read data therefrom or write data therein. The computer 20 generally recognizes the non-volatile storage device as a dummy storage device. Hence, when the portable device 10 is connected to the computer 20, the computer 20 recognizes the program storage unit 12 as a dummy storage device and accesses the contents therein.

The portable device 10 further has a data storage unit 13, which is mainly used for the computer 20 to store data. In this embodiment, the data storage unit 13 is a peripheral device, such as an external hard disk or the like. The drivers stored in the program storage unit 12 mentioned above are used for installation of the peripheral device. The control unit 11 of the portable device 10 controls the communication among the program storage unit 12, the data storage unit 13 and the interface circuit 14. The control unit 11 can be a microprocessor, a micro-controller, a digital signal processor, an application specific integrated circuit (ASIC) or a programmable logic circuit (PLD, CPLD or FPGA). The interface circuit 14 of the portable device 10 fits in with the transmission standards of USB interfaces and can provide a plug &play function. Moreover, the program storage unit 12 can also be an integral part of the data storage unit 13.

Reference is made to Fig. 1 again. When the portable device 10 is connected to the computer 20, the interface circuit 14 communicates with the USB converting unit 21 via a bus and a USB protocol. After a predetermined communication procedure is performed between the operating system (OS) 22 and the portable device 10, a connection is established. Then, the driver of the portable device 10 is installed onto the computer 10. In this embodiment, the driver provided by the program storage unit 12 can be installed on the computer 10 automatically

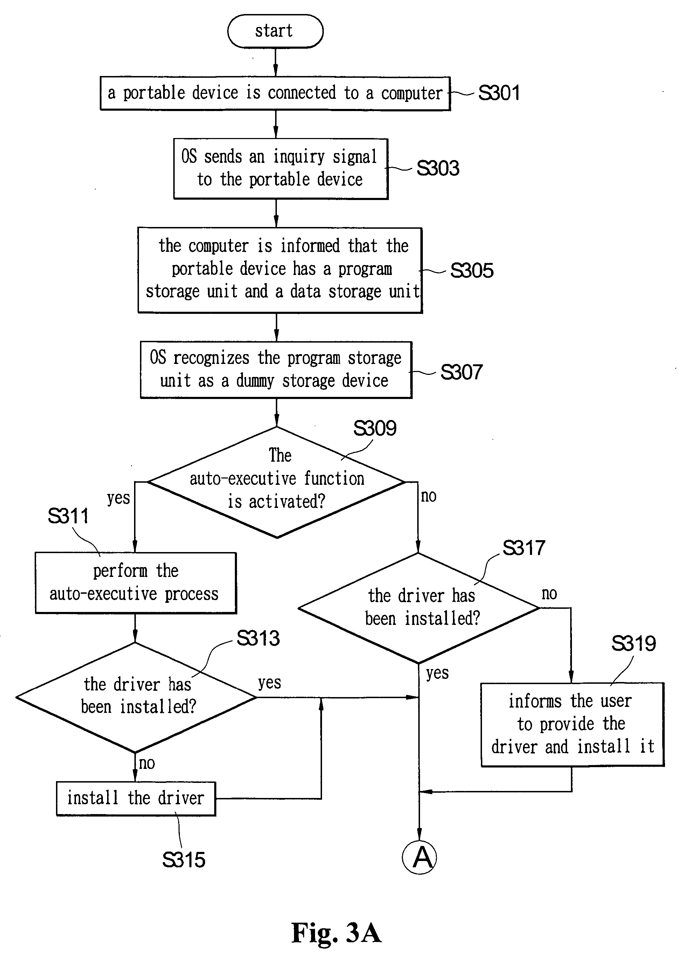

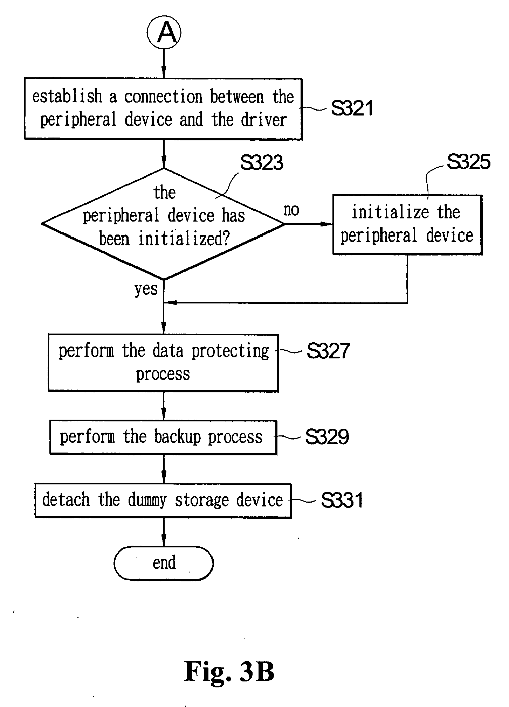

Reference is made to Fig. 3A and Fig. 3B, which are operative flowcharts of the present invention. In this embodiment, the portable device 10 can automatically store a computer's data onto the data storage unit 13 for backup. The operation includes the following steps. First, the portable device 10 is connected to the computer 20 (S301). When the OS 22 finds a new peripheral device connected to the computer 20, it sends an inquiry signal to the portable device 10 according to a USB protocol used (S303). In this way, the OS 22 can know the functionality of the potable device 10.

When the portable device 10 receives the inquiry signal sent from the computer 20, it automatically informs the computer 20 that it has the program storage unit 12 and the data storage unit 13 (S305). In this embodiment, regarding the program storage unit 12, the portable device 10 informs the computer 20 that it has a dummy storage device. Regarding the data storage unit 13, the portable device 10 informs the computer 20 that it has a peripheral device. When the computer 20 receives a response from the portable device 10, the OS 22 recognizes the program storage unit 12 as a dummy storage device (S307) and makes it available for the computer 20. As is known to all, when an external peripheral device is connected a computer, it can be available for the computer only after its driver is installed. After the installation of the driver, the computer can control this external peripheral device normally. Hence, in this embodiment, after the program storage unit 12 is recognized as a dummy storage device, it becomes available for the computer 20. Thus, the OS 22 can access the programs stored in the program storage unit 12.

After the recognition of the program storage unit 12 is performed, the portable device 10 checks whether the auto-executive function of the OS 22 is activated (S309). If the auto-executive function has been activated, the OS 22 performs an auto-executive process by executing the auto-executive programs stored in the program storage unit 12 (S311). Otherwise, the OS 22 determines whether the driver of the external peripheral device, i.e. the data storage unit 13, has been installed on the computer 20 (S317). The peripheral device in this embodiment is a portable hard disk.

When the auto-executive process is performed, the OS 22 determines whether the driver of the external peripheral device has been installed in the computer 20 (S313). If not, the OS 22 installs the driver (S315). The OS 22 can obtain the driver from the dummy storage device. If the driver has been installed, the next step is performed.

If the auto-executive function of the OS 22 is not activated and the driver of the external peripheral device is not installed, the OS 22 informs the user to provide the driver and install it (S319). The user can put an optical disk or a floppy disk having the driver into a specific position on the computer 20 and executes the installation procedure of the driver.

After the driver is installed in the computer 20, the computer 20 can establish a connection between the peripheral device and the driver (S321). When the computer can use the peripheral device normally, it further checks whether the peripheral device has been initialized (S323), i.e. whether the external hard disk has been formatted. If it has not been formatted, the computer formats the peripheral device (S325).

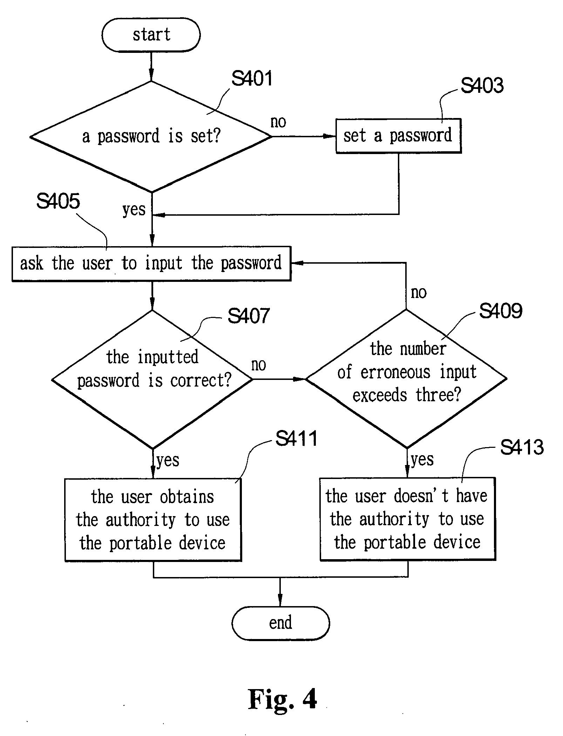

If the external hard disk has been formatted, a data protecting process is performed by executing the data protecting programs stored in the program storage unit 12(S327). The detailed operative steps of this step are shown in Fig. 4. In this embodiment, performing the data protecting process provides a password identification mechanism. Via a user's inputted password, the data protecting programs can check whether the user has the authority to use the portable device.

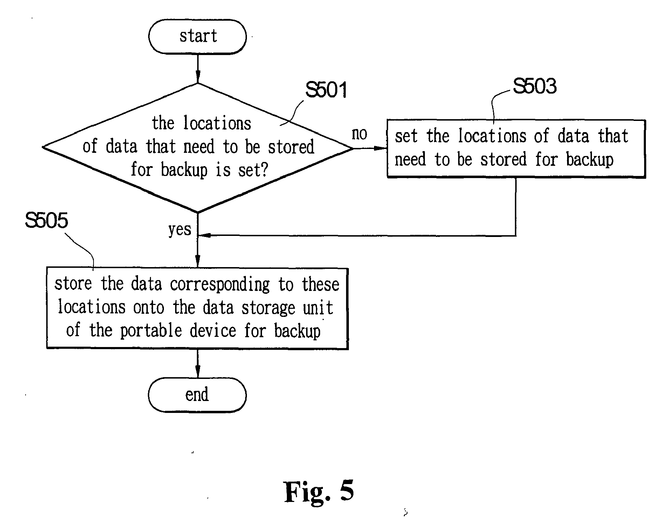

If the user passes the identification procedure of the data protecting process, a backup process is performed by executing the backup programs stored in the program storage unit 12 (S329). The detailed operative steps of this step are shown in Fig. 5. In this embodiment, the backup process is performed to store the predetermined portion of computer's data onto the peripheral device for backup. One can also manually set the locations of data that need to be stored for backup via the backup programs. After the performance of the backup process is completed, the dummy storage device is detached (S331). Only the attachment of the peripheral device, i.e. the data storage unit, is kept so that the compute can still access the peripheral device.

Reference is made to Fig. 4, which is a flowchart showing the operation of data protection in accordance with the present invention. When the data protecting process is performed, the data protecting programs first determine whether a password is set (S401). If the determined result is negative, the data protecting programs remind the user to set a password (S403). In the present invention, when a user uses the portable device for the first time, the data protecting process is performed to provide an input window to guide the user to set a password. When the action of password setting is completed, the data protecting programs ask the user to input the password (S405) and then check whether the inputted password is correct or not (S407). The data protecting programs check the inputted password by comparing it with the password set. If the checking result is positive, the user can have the authority to use the portable device (S411). If the checking result is negative, the data protecting programs further check whether the number of erroneous inputs exceeds three or not (S409). If the number of erroneous input doesn't exceed three, the program returns to step S405; otherwise, the user cannot obtain the authority to use the portable device (S413) and the operation of the portable device is ended.

Reference is made to Fig. 5, which is a flowchart showing the operation of data backup in accordance with the present invention. After the user inputs a correct password and obtains the authority to use the portable device, the backup process is performed by executing the backup programs to check whether the locations of data that need to be stored for backup are set (S501). The locations of data that need to be stored for backup can be specific paths for files. Thus, the backup programs only need to backup the important data or the data that is often altered. As for other data that is not important or isn't altered often, the backup programs do not need to back them up. When the checking result of step S501 is negative, the backup programs ask the user to set the locations of data that need to be stored for backup (S503). After the locations are set, the data corresponding to these locations are automatically stored onto the data storage unit 13 of the portable device by the backup programs for backup (S505). During the backup process, the data can be encrypted and/or compressed for enhancing data security or reducing the amount of required memory space.

To sum up, the portable device provided in the present invention has the following features. When the portable device is connected to a computer, the corresponding driver is installed on the computer automatically if no driver is available on the computer. After the installation is completed, the action of backing up data is performed automatically to store the computer's data onto the portable device. In addition, when the portable device is used for the first time, the installation process is performed together with a password protection mechanism. Only authorized users can use the portable device. It should be noted that the data protecting program and the backup program can be realized by using any kinds of application programs having similar functions.

Although the present invention has been described with reference to the preferred embodiments thereof, it will be understood that the invention is not limited to the details thereof. Various substitutions and modifications have been suggested in the foregoing description, and others will occur to those of ordinary skill in the art. Therefore, all such substitutions and modifications are embraced within the scope of the invention as defined in the appended claims.

## Claims

1. An automatic backup method for a portable device, used to store data of a computer onto the portable device for backup, the automatic backup method comprising:
providing a program storage unit and a data storage unit of the portable device;
receiving an inquiry signal sent from the computer when the portable device is connected to the computer;
informing the computer that the portable device has the program storage unit and the data storage unit;
performing an auto-executive process if an auto-executive function of the computer is activated;
installing a driver stored in the program storage unit onto the computer so that the computer can recognize the data storage unit via the driver if no proper driver is available on the computer;
performing a backup process, wherein the backup process includes providing locations of the data that need to be stored for backup; and
storing the data corresponding to the locations provided by the backup process onto the data storage unit.

2. The automatic backup method as claimed in claim 1, wherein, in the step of informing the computer, the computer is informed by the program storage unit and thus regards the program storage unit as a dummy storage device , and the computer is also informed by the data storage unit and thus regards the data storage unit as a peripheral device.

3. The automatic backup method as claimed in claim 2, wherein the step of performing the auto-executive process is performed after the dummy storage device is recognized.

4. The automatic backup method as claimed in claim 1, wherein, in the step of performing the backup process, the locations provided by the backup process are specific paths for files.

5. The automatic backup method as claimed in claim 1, wherein, in the step of storing the data, the data stored onto the data storage unit is compressed or encrypted.

6. The automatic backup method as claimed in claim 1, further comprising the following steps before the step of performing the backup process:
executing a data protecting process to require a user to input a password, wherein a next step is performed if the input password is correct, and the portable device becomes unusable for the user if the input password is incorrect.

7. A portable device, comprising:
an interface circuit for connecting to a computer;
a data storage unit;
a program storage unit including an auto-executing program, a driver and a backup program, wherein the auto-executing program is capable of being executed in the computer automatically, the driver is used for the computer to recognize the portable device and the backup program is used to drive the computer to store data of the computer to the data storage unit for backup; and
a control unit controlling communication between the data storage unit and the interface circuit and between the program storage unit and the interface circuit;
wherein, when the interface circuit is connected to the computer, the control unit receives an inquiry signal from the computer and then informs the computer that the portable device has the data storage unit and the program storage unit; next, the computer executes the auto-executive program to install the driver onto the computer; and after the installation of the driver, the backup program automatically drives the computer to store data of the computer onto the data storage unit for backup.

8. The portable device as claimed in claim 7, wherein the interface circuit uses a transmission standard of a universal serial bus (USB) interface, the data storage unit is a hard disk and the program storage unit is a non-volatile storage device.

9. The portable device as claimed in claim 7, wherein the computer is informed by the control unit that the portable device has a dummy storage device, i.e. the program storage unit, and a peripheral device, i.e. the data storage unit.

10. The portable device as claimed in claim 7, wherein the program storage unit further has a data protecting program for data security, the data protecting program checks whether a user has an authority to use the portable device according to a password inputted by the user.
